# EUROPEAN PATENT APPLICATION

(11) **EP 3 566 866 A1**
(43) Date of publication of application: **13.11.2019**
(21) Application number: 19173239.5
(22) Date of filing: 08.05.2019
(51) Int. Cl.: B32B 27/12, B32B 5/02, B32B 27/20, B32B 27/40, B32B 37/00

(54) **MULTILAYER MATERIAL BASED ON MICROFIBER AND POLYURETHANE AND PROCESS FOR OBTAINING IT**

(30) Priority: 11.05.2018 IT 201800005291
(71) Applicant: Lorenzi S.r.l., 35010 Vigonza (PD) (IT)
(72) Inventor: LORENZI, LORENZO, 30035 Venezia (IT)
(74) Representative: Morabito, Sara

(57) **Abstract**

A multilayer material (100) comprises at least a support layer of coagulated microfiber (1) and at least a cover layer (2) made of polyurethane applied by spreading on said support layer of coagulated microfiber (1), characterised in that said support layer of coagulated microfiber (1) and said cover layer (2) comprise one or more colouring compounds suitable for giving to said support layer (1) and to said cover layer (2) a dark coloration, said one or more colouring compound being so adjusted to obtain a multilayer material (100) having a reflectance greater than 60%, preferably greater than 75%, in a greatly preferred manner greater than 80%, and in a maximally preferred manner greater than 85% in the infrared wavelength.

## Description

The present invention relates to multilayer materials and in particular relates to a new multilayer material having a support layer of microfiber and a cover layer of polyurethane.

The material of the invention is particularly intended for use in the field of uppers for footwear, outdoor furniture, automotive equipment.

In particular the material of the invention is suited for being used for motorcycle and bicycle saddlery.

The invention particularly relates to a multilayer material which is particularly intended for the production of materials having the appearance of hide, which are colloquially known as leatherette.

The invention particularly relates to a multilayer material which is intended to be used as a covering for use in the field of furniture, for textiles, furnishing elements, such as sofas, chairs and the like, and as a covering material for use in the automotive parts sector.

The material of the invention is further particularly suitable for being used in all the applications in which there is used a material which is raw cut and which has a high aesthetic appearance and at the same time desired mechanical properties.

The present invention also relates to the process for obtaining the stratified material.

There are known stratified materials which are obtained by connecting two or more layers of identical or different materials.

An example of a stratified material involves the sheets which are intended to wrap food products in retail. These sheets are constituted by a sheet of paper on one side of which there is connected and joined a sheet of polyethylene.

The polyethylene sheet having minimum thickness insulates the food product from contact with the paper sheet and prevents the paper sheet from becoming dirty and wet and the ink of the writing reaching the food product.

There are known coupled and/or stratified fabrics which are obtained by joining two different fabrics in order to exploit the single characteristics of each fabric.

For example, a first fabric is intended for the internal portion of the item of clothing and is capable of maintaining body heat, while a second fabric is intended for the external portion of the item of clothing and is capable of allowing transpiration while ensuring the impermeability to water.

There are also known coupled materials, wherein one of the layers may serve to reinforce the material itself and/or to aesthetically increase the value thereof and/or protect it from abrasion or wear, etc.

For some applications, for example, in order to produce saddles of bicycles or motorcycles or furniture coverings, there are used materials hide, which are colloquially known as leatherette, and which have a support layer of microfiber because this material is suitable for the support applied thereto and a cover layer. The cover layer is applied to the support layer and is intended for protecting the support layer and to confer the desired external appearance to the multilayer material.

In some applications, there are required covering materials having a black colouration, for example, in order to produce objects which can readily become dirty, such as for example the saddles.

In some of these applications, it is further necessary for these materials not to heat up too readily if exposed to sunshine, particularly for extended times.

The dark material and the dark leatherette have nonetheless some drawbacks, among which the most important is that due to the dark or black coloration, they overheat when exposed to the solar radiation reaching in very short periods of time high temperatures. When the leatherette are used for covering the saddles of the bikes or motorbikes or car seats, this situation is very common mainly during summer, and it is particularly undesired as the leatherette is contact with the body of the user.

This problem is particularly felt, in the production of saddles and seats and also in the production of coverings for furniture elements, in particularly for those intended for outdoor use.

Nonetheless there is the need for a multilayer material having a support layer in microfiber and a cover layer in polyurethane that satisfies such requirements, i.e. a multilayer material having a dark coloration and only limitedly subjected to heating.

However, at the moment there is no multilayer material having a support layer of microfiber and a cover layer of polyurethane which has a dark coloration even and in particular a raw cut material having a dark coloration and a high reflectance to the infrared radiation, in other words a material subjected only limitedly to heating.

In fact, the materials currently available have an inertia to heating which is limited over time.

Furthermore, the known materials and known leatherette are not suitable for some applications.

The present invention relates to a new multilayer material with a support layer of microfiber and a coating of polyurethane which is particularly intended for use in the fields of uppers for footwear, outdoor furniture, automotive equipment and motorcycle and bicycle saddlery.

The present invention also relates to the process for obtaining the multilayer material.

An object of the invention is to provide a multilayer material having a support layer of microfiber and a cover layer of polyurethane having high levels of softness and the aesthetic appearance of a hide, or a leatherette, and which can be effectively used in wide ranges of temperature without the chemical/physical characteristics deteriorating and without becoming heated excessively.

An object of the invention is to provide a new stratified material which has high characteristics of mechanical strength. In particular, the new material has a high resistance to abrasion and further has high mechanical strength with respect to traction and tearing.

The material of the invention has a high thermal inertia to heating even if subjected to sources of irradiation for long times.

Another object of the present invention is to provide a multilayer material which is subjected to reduced heating following exposure to solar radiation.

The material of the invention can therefore particularly and effectively be used to produce or cover objects which are subjected to solar radiation, such as objects for outdoor furniture, accessories or parts of cars, seats of motorcycles and bicycles.

These objects and other objects are achieved by the multilayer material which is produced according to claim 1.

Another object of the invention is to provide a method for producing a multilayer material having a support layer of microfiber and a cover layer of polyurethane in which the cover layer of polyurethane is spread over the support layer in microfiber, the multilayer material having a high heating inertia.

Another object of the invention is to provide a method for producing a multilayer material having a support layer of microfiber having a dark coloration and a cover layer of polyurethane having dark coloration. These objects and other objects are achieved by method according to claim 12.

In a first aspect of the invention, there is provided a multilayer material comprising a least one support layer of coagulated microfiber and at least one cover layer of polyurethane applied by spreading on said support layer of coagulated microfiber, characterised in that each one of said support layer of coagulated microfiber and said cover layer comprises one or more colouring compounds suitable for giving to said support layer and to said cover layer a dark coloration, said one or more colouring compounds being adjusted so as to obtain a multilayer material having a reflectance higher than 60%, preferably higher than 75%, in a greatly preferred manner greater than 80%, and in a maximally preferred manner greater than 85% in the infrared wavelengths.

Owing to this aspect of the invention it is obtained a material having a limited tendency to heat up and a material that can thus be used when it is required a material that heats only limitedly even if subjected to solar radiation.

According to the invention it is thus furnished a multilayer material comprising a colouring compound either in the support layer and in the cover layer, the colouring compounds being suitable for giving to each layer a dark coloration.

Therefore such material, even with raw cut edges, has always a dark coloration, also at the raw cut edges thereof.

The presence of a colouring compound giving a dark coloration either in the support layer and in the cover layer also allows to be obtained a multilayer material having a dark coloration even in raw cut condition.

It is thus obtained a material having a dark coloration in the thickness thereof and also a high reflectance in the infrared wavelengths, and thus high inertia to overheating.

Advantageously, the material of the invention has a reflectance greater than 70%, preferably greater than 75%, in a greatly preferred manner greater than 80%, and in a maximally preferred manner greater than 85% in the near-infrared (NIR) wavelengths.

Advantageously, the material of the invention has a reflectance greater than 70%, preferably greater than 75%, in a greatly preferred manner greater than 80%, and in a maximally preferred manner greater than 85% at a wavelength of about 900 nm.

Advantageously, the support layer comprises at least a first colouring compound at a weight concentration measured as weight concentration of the first colouring compound at dry state comprised between 0.01% and 15%, preferably between 2% and 8%, most preferably about 6% over the weight of the microfiber to be dyed.

The quantity and the type of the first colouring compound are so chosen to give to the support layer in microfiber a dark coloration, preferably dark green coloration.

Advantageously, the cover layer comprises at least a second colouring compound at a weight concentration measured as weight concentration of the second colouring compound at dry state in the colouring solution comprised between 0.01% - 15% and preferably between 2% -8% in relation to the weight of the polyurethane composition.

The quantity and the type of the second colouring compound are so chosen to give to the cover layer a dark coloration, preferably black coloration.

Advantageously the second colouring compound is a black pigment.

Advantageously it is provided for forming a solution of the black pigment in Dioctyl adipate (DOA). Such solution of the black pigment is then mixed by means of mechanical mixing with the polyurethane composition, the latter is at liquid state and it is colourless. In this way the polyurethane composition is coloured.

It is thus obtained a material having a high reflectance in the infrared spectrum.

The solar radiation has an electromagnetic spectrum comprising electromagnetic waves having a frequency and wavelength which are different from each other.

The visible spectrum comprises electromagnetic radiations with wavelengths between 400 nm and 700 nm; in this range, light appears to our eyes with different colourations in accordance with the radiation which is absorbed. In particular, an object which absorbs the electromagnetic radiation in the visible wavelengths, without returning it to our eyes, appears black here.

The infrared radiation is an electromagnetic radiation having a wavelength between 700 nm and 1 mm, the radiation with a wavelength between 700 nm and 2500 nm is called near-infrared or NIR.

Approximately 50% of solar radiation is absorbed by the earth's surface. The black surfaces usually absorb up to 90% of this energy and therefore become overheated.

However, white surfaces absorb only up to 25% of the solar radiation and tend to remain much cooler. When the radiation is absorbed, heat is generated in the object, by increasing the absorption the temperature of the object increases, vice versa by increasing the reflection the heating is reduced.

In particular, the multilayer material of the invention allows a percentage >60% of the radiation which strikes it to be reflected in the infrared wavelength range and this allows the overheating of the material of the invention to be greatly limited and therefore of the objects which are covered therewith.

The first colouring compound and the second colouring compound have a black colouration, therefore both the support layer and the cover layer of the material of the invention have a dark colouration. Advantageously, the first colouring compound and the second colouring compound are different from each other.

The colouring materials of the support layer and of the cover layer are selected so as to be similar to the material of the support layer and the cover layer, respectively.

There are used colouring compounds which absorb the visible radiation so as to be dark in colour to the human eye.

Advantageously the first colouring compound is so adjusted that the support layer is dark green in colour to the human eye.

Advantageously the second colouring compound is so adjusted that the cover layer is black in colour to the human eye.

Furthermore, there are selected a first colouring compound and a second colouring compound which have a reflectance in the infrared spectrum greater than 60%, preferably greater than 75%, in a greatly preferred manner greater than 80%, and in a maximally preferred manner greater than 85%.

This allows a dark multilayer material which is subjected to heating only to a limited extent to be obtained. Therefore, for the same amount of colouration and conditions of use, the material of the invention becomes less heated less than known materials.

This effect of limiting the heating is produced in both the layers of the multi-layer material, that is to say, both in the cover layer of polyurethane and in the support layer of microfiber.

Advantageously, the first colouring compound comprises one or more black azoic dyes.

Advantageously, the second colouring compound comprises one or more organic black pigments.

The support layer is advantageously produced from polyamide polymer microfiber which is coagulated with polyurethane, in a preferred composition of 50% PA/50% PU.

The support layer of coagulated microfiber is preferably produced from a polyamide polymer microfiber and advantageously comprises approximately from 40% to 60% by weight of polyamide and approximately from 60% to 40% by weight of polyurethane, preferably approximately from 45 to 55% by weight of polyamide and approximately from 55 to 45% by weight of polyurethane, even more preferably approximately 50% by weight of polyamide and approximately 50% by weight of polyurethane.

It is preferable for the composition of the support layer of coagulated microfiber to be constituted by approximately half polyamide and approximately half polyurethane.

Preferably, nylon 6 fibres are used for the support layer of microfiber.

It is preferable for the thickness of the support layer of coagulated microfiber to be between 0.3 mm and 2.1 mm, in a particularly preferred version between 0.9 mm and 1.3 mm.

Advantageously, the support layer of microfiber is formed by coagulated woven/nonwoven polyamide microfiber.

The support layer comprises polymer microfiber and the black azoic dye which is applied to the support layer by means of a water dyeing process.

In this manner, the black azoic dye colours all the microfibers of the support layer of microfiber, conferring a uniform dark colouring to the support layer of microfiber.

Advantageously the quantity of the black azoic dye is so chosen to obtain a support layer of microfiber, having a uniform dark green colouring.

In a version, the multilayer material of the invention comprises a plurality of layers of microfiber which are overlaid on each other, each of the support layers of microfiber having a dark colouring and having a reflectivity greater than 60% in the infrared wavelength.

The cover layer has a thickness preferably comprised between 0.05 and 0.3 mm.

The cover layer is of polyurethane and it is coupled to the support layer of microfiber by means of a coating process with a support material, advantageously by means of transfer with release paper.

In one version, the support material has a decoration or texture which, in the coupling process, is irreversibly transferred to the surface of the cover layer of polyurethane.

In this manner, there is produced a cover layer of polyurethane which has a desired decoration and which therefore has a desired aesthetic effect.

The support layer is dyed with a black dye by means of water dyeing in such a manner that the support layer appears dark, the cover layer of polyurethane is coloured black by means of a black pigment.

There are selected an organic black pigment and an azoic black dye having properties of high absorption of solar radiation in the visible spectrum, that is to say, in particular from 400 to 700 nm. In this manner, the multilayer material of the invention appears to be substantially black to the human eye because a high percentage, advantageously greater than 90%, of the radiation incident to the multilayer material is absorbed.

The first colouring compound and the second colouring compound are further selected so as to ensure a high level of reflectance and vice versa a low level of absorption of the radiation for wavelengths greater than 700 nm, that is to say, in the infrared wavelength and in particular near-infrared wavelength. Therefore, the multilayer material of the invention has a low absorption of the radiation in the infrared wavelength and in particular near-infrared wavelength.

This allows the multilayer material of the invention to appear substantially black but to become heated much less than conventional black materials.

Solar radiation has a wide spectrum in terms of wavelength. The visible range extends from 400 to 700 nm. 900 nm is infrared radiation. It is possible to measure what is the reflection spectrum of a product or what are the reflection percentages at different wavelengths.

In a second aspect of the invention, there is provided a method for producing a multilayer material having a support layer and a cover layer, the method comprising the following steps:
- forming a support layer of microfiber of polymer material,
- impregnating the support layer of microfiber with a polyurethane resin and subjecting the impregnated support layer of microfiber to coagulation so as to obtain a support layer of coagulated microfiber,
- colouring said support layer of microfiber through water dyeing process using a dyeing solution comprising a weight percentage of a first colouring compound suitable for giving a dark coloration to said support layer of microfiber measured as weight concentration of the first colouring compound at dry state comprised between 0.01% and 15%, preferably between 2% and 8%, most preferably about 6% over the weight of the support layer of coagulated microfiber to be dyed,
- preparing a polyurethane composition,
- mixing said polyurethane composition with a colouring solution comprising a concentration indicated as weight percentage of a second colouring compound suitable for giving a black coloration to the polyurethane composition at dry state comprised between 0.01% - 15% in weight and preferably between 2% -8% in weight in relation to the weight of the polyurethane composition for obtaining a coloured polyurethane composition,
- spreading the coloured polyurethane composition on a support material forming a polyurethane layer on said support material,
- applying said support material with the polyurethane layer to said support layer of coagulated microfiber so that the polyurethane is directed towards and in contact with the support layer of coagulated microfiber, thus obtaining a multilayer intermediate material,
- laminating said multilayer intermediate material by pressing the support layer of microfiber and said polyurethane layer in order to mutually couple them.

With the method of the invention, there is obtained a multilayer material which has at the same time a dark colouration throughout its thickness and which is not subjected to overheating phenomena.

The support layer and the cover layer are provided with a first and a second colouring compound, respectively, which have a black colouration because they absorb the visible wavelengths and which have a reflectance in the infrared wavelengths greater than 60%, preferably greater than 75%, in a greatly preferred manner greater than 80%, and in a maximally preferred manner greater than 85%.

The support layer of microfiber contains a first colouring compound having a black colouration at a dry concentration between 0.01% and 15%, preferably between 2% and 8%.

Advantageously, the first colouring compound comprises one or more black azoic dyes.

Advantageously, the second colouring compound comprises one or more organic black pigments.

With the method of the invention it is obtained a multilayer material having a support layer of microfiber and a cover layer made of polyurethane mutually connected in a stable manner.

A liquid polyurethane composition is formed at which the colouring solution is added, the colouring solution comprising a concentration indicated as weight percentage of a second colouring compound suitable for giving a black coloration to the polyurethane composition at dry state comprised between 0.01% - 15% in weight and preferably between 2% -8% in weight in relation to the weight of the polyurethane composition for obtaining a coloured polyurethane composition.

The coloured polyurethane composition in which the polyurethane is not reticulated is coated in the liquid state on the support material. Subsequently the support material which is provided with the polyurethane layer is applied to the support layer of coagulated microfiber in order to make the polyurethane to adhere to the support layer of coagulated microfiber and subsequently the polyurethane is subjected to cross-linking.

The non-reticulated polyurethane is introduced into the fabric of the support layer of coagulated microfiber and subsequently during the cross-linking it is connected to the microfiber of the support layer of microfiber.

There is formed a chemical bond, cross-linking, between the polyurethane and the microfiber which allows the support layer of microfiber and the cover layer to be connected and kept connected over time.

This prevents the use of additional adhesive in order to mutually connect the support layer of microfiber and the cover layer.

Advantageously the spreading phase comprises spreading the polyurethane composition on the support material in a plurality of subsequent polyurethane layers.

Usually three subsequent polyurethane layers are formed.

Advantageously at least the first and the second polyurethane layers are formed by a coloured polyurethane composition, that is coloured as indicated above.

The third polyurethane layer, that acts as adhesive layer and that is intended to be positioned towards the support layer of coagulated microfiber is advantageously transparent.

At the end of the spreading phase of each single layer, the material is heated in a drying oven. Subsequently the support material with the polyurethane layers is coupled to the support layer of coagulated microfiber obtaining the intermediate multilayer material.

The intermediate multilayer material is introduced in a drying oven for causing the reticulation of the polyurethane. At the same time the intermediate multilayer material is subjected to lamination by means of a couple of laminating cylinders. With the laminating cylinders, the intermediate multilayer material the intermediate multilayer material is hot pressed by means of the cylinders for mutually connecting the polyurethane layer and the support layer of coagulated microfiber.

The support layer of coagulated microfiber and the cover layer of polyurethane are laminated, that is to say, connected in a direct manner.

Subsequently the material obtained is subjected to drying process so as to cause the reticulation of the polyurethane and the cross-linking between the cover layer in polyurethane and the support layer of coagulated microfiber.

The reticulation of the polyurethane in contact with the microfiber and partially absorbed by the microfiber creates a physical bond between polyurethane and microfiber that creates adhesion between the cover layer of polyurethane and the support layer of coagulated microfiber, the two layers are therefore mutually connected.

At the end of the process the multilayer material is separated from the support material, the latter can be used again.

The production method for the multilayer material of the invention is substantially simplified with respect to known methods.

The support material on which the polyurethane is coated is preferably a transfer paper or release paper. According to a preferred version of the method of the invention, the support material has a desired decoration which corresponds to the negative of the decoration which should be produced on the multilayer material.

In this manner, there is produced a cover layer of polyurethane which has a desired decoration and which therefore has a desired aesthetic effect.

On the surface of the multilayer material it is irreversibly formed the negative of the texture or of the decoration of the release paper.

The provision of a dyeing phase for dyeing the support layer of coagulated microfiber allows a support layer of coagulated microfiber having a dark coloration.

The use of a water dye process allows the dyeing of the support layer of coagulated microfiber to be optimised.

For dyeing the support layer of coagulated microfiber, the coagulated microfiber to be dyed is fed in the dyeing device.

It is then formed a dyeing solution dissolving a desired quantity of the first colouring compound in boiling water.

A quantity of the first colouring compound comprised between 0.01% and 15% in weight, preferably between 2% and 8% in weight, most preferably about 6% in weight over the weight of the coagulated microfiber to be coloured it is used.

It is also added an acid solvent, preferably formic acid, for making acid the dyeing bath and dyeing the microfiber.

It is thus obtained a multilayer material having a dark coloration sufficiently uniform and that can be used also in uses in which a raw-cut material is needed. The multilayer material of the invention as a dark coloration also along the edges and the thickness thereof.

It is also obtained a material having a high reflectance, and thus a high heating inertia.

In the appended Figures, there is set out by way of non-limiting example an embodiment of the multilayer material of the invention.
Figure 1 is a cutaway schematic view of a multilayer material which is produced according to the invention;
Figure 2 is a graph showing the reflectance of a multilayer material produced according to the invention.

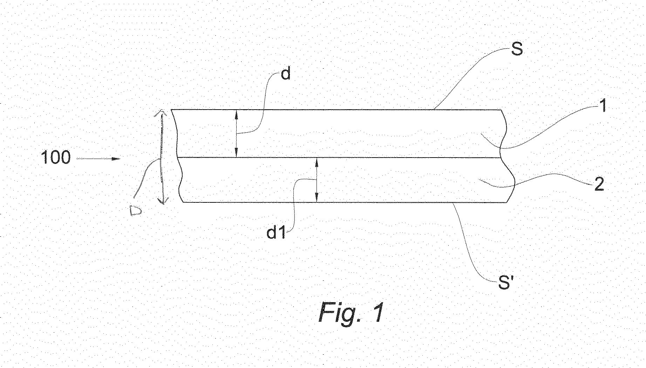

With the reference to Figure 1, the multilayer material 100 of the invention comprises a support layer 1 of coagulated microfiber and a cover layer 2 which is produced from polyurethane applied to the support layer 1.

The support layer 1 of coagulated microfiber and the cover layer 2 are in direct contact with each other so as to be mutually connected in a direct manner without using adhesives, as will be better described below. The support layer 1 of coagulated microfiber forms a first surface external S of the multilayer material 100, while the cover layer 2 forms a second surface external S' of the multilayer material 100.

In the multilayer material 100 of the invention, the two visible opposing faces S, S' of the multilayer material 100 itself are constituted by the support layer 1 of microfiber and the cover layer 2 of polyurethane, respectively.

This allows the properties of the multilayer material 100 of the invention to be optimized.

The second surface S' is generally intended to form the visible surface of the multilayer material 100 while the first surface S is intended to form the internal surface or the rear of the multilayer material 100.

In some applications, however, the second surface S' forms the internal surface or the rear of the multilayer material 100 and, vice versa, the first surface S forms the visible surface of the multilayer material 100.

The multilayer material 100 has an overall thickness "D".

The support layer 1 of coagulated microfiber has a thickness "d" between 0.3 mm and 2.1 mm, in a particularly preferred version between 0.9 and 1.3 mm.

The support layer 1 of coagulated microfiber is preferably a polyamide microfiber coagulated with polyurethane. Preferably, the support layer 1 is a nylon 6 microfiber.

The support layer 1 of coagulated microfiber comprises approximately from 40% to 60% by weight of polyamide and approximately from 40% to 60% by weight of polyurethane, preferably approximately from 45 to 55% by weight of polyamide and approximately from 45 to 55% by weight of polyurethane, even more preferably approximately 50% by weight of polyamide and approximately 50% by weight of polyurethane.

It is preferable for the composition of the support layer 1 of coagulated microfiber to be constituted by approximately half polyamide and approximately half polyurethane.

The support layer 1 of coagulated microfiber is produced from woven/nonwoven polyamide microfiber which is coagulated with polyurethane resin.

The support layer 1 of coagulated microfiber is obtained by means of a process which is known in the sector which will not, therefore, be described in detail but instead will be outlined briefly below.

First, there is carried out the spinning of two-component fibres of polyamide 6, that is to say, nylon 6 fibres, and LDPE, low-density polyethylene, with a structure with irregular islands.

Thus, there is formed a material having a matrix which is constituted by LDPE, the sea component, inside which there are included fibres of polyamide 6, the island component. The polyamide 6 fibres have a wide distribution of diameters.

Subsequently, the fibres obtained are cut so as to form short fibres.

Therefore, there is provision for the needling with needles of the material which is obtained so as to produce a soft "mattress" of woven/nonwoven microfiber fibres.

Subsequently, the microfiber mattress is subjected to coagulation, a wet process by means of which the microfiber mattress is impregnated with polyurethane and therefore the polyurethane is coagulated on the microfiber mattress previously obtained.

For the coagulation, there is used a solution of polyurethane in DMF, with which the microfiber mattress is impregnated. The impregnated material is therefore caused to pass into bowls of water so as to remove the DMF and to progressively deposit the polyurethane in over-saturation on the woven/nonwoven fibres. Subsequently, by means of processing with toluene solvent, LDPE is released from the fibres, producing the final desired composition of polyamide and polyurethane.

Alternatively, the support layer 1 of coagulated microfiber is produced according to one of the methods known for the production of microfibers, for example, as described in EP1760189, and subsequently subjected to coagulation with polyurethane resin so as to obtain layers 1 of coagulated microfiber. Subsequently the coagulated microfiber is subjected to a dyeing process with a dyeing solution comprising a first colouring compound at a weight concentration measured as weight concentration of the first colouring compound at dry state comprised between 0.01% and 15%, preferably between 2% and 8%, most preferably about 6% over the weight of the microfiber to be dyed.

It is thus obtained a support layer 1 of coagulated microfiber having dark colour, preferably dark green colour.

The first colouring compound preferably comprises one or more black azoic dyes which are capable of conferring a black colouration on the support layer of microfiber.

The cover layer 2 is produced from polyurethane and has a thickness d1 from 0.05 mm to 0.5 mm, preferably from 0.1 to 0.3 mm.

The second surface S' of the multilayer material 100 is provided with decorations or embellishments in accordance with the aesthetic effect which it is desirable to create with the multilayer material of the invention.

The support layer 2 comprises a second colouring component.

The support layer 2 is obtained by colouring a polyurethane composition with a colouring solution comprising a second colouring compound at suitable for giving a black colouration to the polyurethane composition at a weight concentration measured as weight concentration of the second colouring compound at dry state comprised between 0.01% and 15%, preferably between 2% and 8% over the weight of the polyurethane composition to be coloured

The weight concentration values of the first and second colouring compounds are referred to the dry content respectively of the first and second colouring compounds.

The second colouring compound comprises one or more organic black pigments which are capable of conferring a black colouration on the cover layer.

The multilayer material of the invention has a dark colouration, both the support layer 1 and the cover layer 2 having a dark colouration.

The quantity and the type of the first and second colouring compounds are so chosen to obtain a multilayer material 100 having a reflectance greater than 60%, preferably greater than 75%, in a greatly preferred manner greater than 80%, and in a maximally preferred manner greater than 85% in the infrared wavelengths.

Both the support layer 1 and the cover layer 2 of the multilayer material 100 of the invention have a reflectance greater than 60%, preferably greater than 75%, in a greatly preferred manner greater than 80%, and in a maximally preferred manner greater than 85% in the infrared wavelengths.

This brings about a multilayer material 100 with a dark colouration throughout the overall thickness D of the material and a multilayer material 100 which has a high inertia with respect to overheating.

In particular, the multilayer material 100 of the invention is not subjected to overheating even in the case of prolonged exposure to solar radiation.

By varying the quantity and the type of organic black pigments and/or black azoic dyes, it is possible to modulate the reflectance of the multilayer material of the invention.

In order to obtain the multilayer material 100 of the invention, there is first provision for forming the support layer 1 of coagulated microfiber.

As set out above, the support layer 1 of coagulated microfiber is dyed by means of a water based dyeing solution with one or more black azoic dyes at a dry weight concentration comprised between 0.01% and 15%, preferably between 2% and 8%, most preferably about 6% over the weight of the coagulated microfiber to be dyed.

By varying the quantity and the type of black azoic dyes, it is possible to adjust the coloration of the support layer 1.

For forming the cover layer of polyurethane it is provided a polyurethane composition to which a colouring solution is mixed. The colouring solution comprising one or more organic black pigments in a dry weight concentration comprised between 0.01% and 15% in weight, preferably between 2% and 8% in weight, over the weight of the polyurethane composition to be coloured.

It is obtained a black polyurethane composition that is coated on a release paper, or other suitable support material, so as to form a polyurethane layer on the support material.

Subsequently, the release paper is applied to the support layer 1 of coagulated microfiber so that the polyurethane is directed towards the support layer 1 of coagulated microfiber and is in contact therewith. Therefore, there is obtained a multilayer intermediate material which is formed by the support layer of coagulated microfiber, the layer of polyurethane and which is provided with the release paper.

The multilayer intermediate material which is obtained is subjected to lamination by means of laminating cylinders so as to favourably adhesively bond the support layer 1 of coagulated microfiber and the polyurethane layer to each other.

The multilayer intermediate material is pressed in the hot state by means of cylinders in order to produce the cross-linking of the polyurethane and the stable adhesion between the support layer of microfiber and the cover layer of polyurethane.

Therefore, there is generated a cover layer 2 of polyurethane which is applied to the support layer 1 of coagulated microfiber and which is bonded to the support layer 1 of microfiber.

In this manner, there is brought about and completed the cross-linking and the formation of a stable bond is allowed between the support layer 1 of coagulated microfiber and the cover layer 2 of polyurethane.

A chemical bond, cross-linking, is formed between the polyurethane and the microfiber which allows the support layer 1 of microfiber and the cover layer 2 of polyurethane to be kept bonded.

This allows a particularly stable adhesion to be obtained between the support layer 1 of coagulated microfiber and the cover layer 2.

Therefore, a multilayer material 100 which is particularly stable and in which the layers are adhesively bonded to each other in a stable manner is obtained.

If a release paper which has a desired decoration is used, the second surface S' of the cover layer 2 of polyurethane is provided with a decoration corresponding to the negative of the decoration which is provided on the release paper.

### EXAMPLE 1

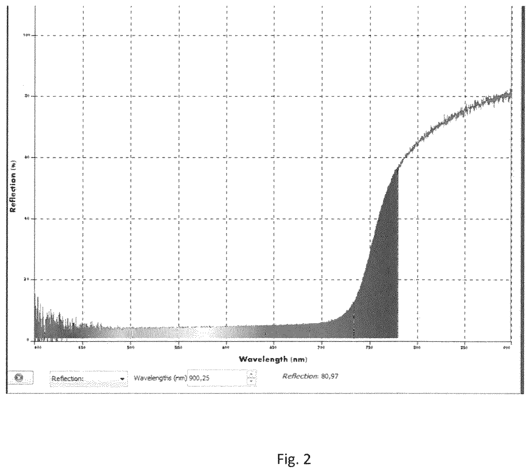

It is reported in Figure 2 a graph relating to a reflectance spectrum of a multilayer material which is obtained according to the invention.

The multilayer material comprises a support layer of microfiber 1 formed by 50% PU and 50% PA, having a thickness "d" of 0.9mm +/- 0.05 mm

The support layer 1 of microfiber has been dyed with a dyeing solution comprising about 6% in weight of the first colouring compound, at dry state, over the weight of the microfiber to be dyed.

The multilayer material comprises a cover layer 2 in polyurethane having a thickness "d1" of 0.06 mm +/-0.03 mm.

The cover layer 2 has been coloured using a solution at 10% in weight of the second colouring compound in relation to the weight of the polyurethane composition to be coloured.

As may be noted from an analysis of the graph of Figure 2, the multilayer material of the example has in the visible wavelengths (400 to 700 nm) a low reflection and high absorption and therefore the colour black is perceived.

The reflectivity of the multilayer material increases at wavelengths greater than 700 nm or in the infrared spectrum.

The reflectivity increases with an increase of the wavelength.

In particular at 900 nm, in the infrared spectrum, the material of the invention has a reflection of approximately 80.97%.

Changing the first and/or the second colouring compound and/or the quantity of the first and/or the second colouring compound in the support layer of microfiber and in the cover layer of polyurethane respectively, it is possible to adjust the reflectance of the multilayer material of the invention.

The multilayer material of the invention has a number of advantages, the support layer of coagulated microfiber provides dimensional stability and resistance to mesh breakage, the cover layer 2 of polyurethane allows the provision of a desired external appearance which is fire-resistant.

Furthermore, the support layer 1 of coagulated microfiber is not subjected to mesh breakage and fraying being a nonwoven fabric.

These are the schematic methods which are sufficient for the person skilled in the art to carry out the invention, consequently, in a specific application there could be variants without prejudicing the substance of the innovative concept.

The invention can also be carried out in the following examples:
1. Stratified composite material, particularly for producing uppers for footwear, outdoor furniture, automotive sector equipment and motorcycle and bicycle saddlery, characterized in that it comprises at least two layers, of which a first is a support layer of microfiber and a second is a finishing layer of polyurethane, obtained by being coated on the first support layer.
2. Stratified composite material as in example 1, characterized in that it also comprises at least one black azoic colourant which is present in the support layer and at least one organic black pigment in the surface finishing layer, and wherein the organic black pigment and black azoic colourant have a percentage of absorption of solar radiation in the visible spectrum greater than 90%.
3. Stratified composite material as in example 1, characterized in that the support layer is produced from polyamide microfiber which is coagulated with polyurethane.
4. Stratified composite material as in example 3, characterized in that the support layer is produced from microfiber having a composition of 50% PA/50% PU.
5. Stratified composite material as in one of the preceding examples, characterized in that the support layer has a thickness which is variable from 0.3 mm to 2.1 mm.
6. Stratified composite material as in example 1, characterized in that the second finishing layer is constituted by polyurethane which is obtained by being coated with a release paper and coloured black by using the black pigment.
7. Stratified composite material as in one of the preceding examples, characterized in that the finishing layer preferably has a thickness which is variable from 0.05 mm to 0.3 mm.
8. Method for obtaining a stratified material, characterized in that it comprises the steps of:
   - preparing the first support layer, wherein the support comprises the black colourant;
   - coating polyurethane on the support layer.

## Claims

1. Multilayer material (100) comprising at least a support layer of coagulated microfiber (1) and at least a cover layer (2) made of polyurethane applied by spreading on said support layer of coagulated microfiber (1), **characterised in that** each one of said support layer of coagulated microfiber (1) and said cover layer (2) comprise one or more colouring compounds suitable for giving to said support layer (1) and to said cover layer (2) a dark coloration, said one or more colouring compound being so adjusted to obtain a multilayer material (100) having a reflectance greater than 60%, preferably greater than 75%, in a greatly preferred manner greater than 80%, and in a maximally preferred manner greater than 85% in the infrared wavelength.

2. Multilayer material (100) according to the preceding claim, wherein said one or more colouring compounds are adjusted so as to obtain a multilayer material (100) having a reflectance greater than 60%, preferably greater than 75%, in a greatly preferred manner greater than 80%, and in a maximally preferred manner greater than 85% at a wavelength of about 900 nm.

3. Multilayer material (100) according to claim 1 or 2, wherein said support layer (1) comprises at least a first colouring compound in a weight concentration indicated as the concentration of the first colouring compound at dry state comprised between 0.01% and 15%, preferably between 2% and 8%, most preferably about 6% over the weight of the support layer (1).

4. Multilayer material (100) according to the preceding claim, wherein said first colouring compound comprises one or more black azoic dyes suitable for conferring black colour to said support layer (1).

5. Multilayer material (100) according to anyone of claims 1 to 4, wherein said cover layer (2) comprises a second colouring compound in a weight concentration measured as weight concentration of the second colouring compound at dry state in the colouring solution comprised between 0.01% - 15% and preferably between 2% -8% in relation to the weight of the polyurethane composition of said cover layer (2).

6. Multilayer material (100) according to the preceding claim, wherein said second colouring compound comprises one or more organic black pigments suitable for giving a black colour to said cover layer (2).

7. Multilayer material (100) according to anyone of the preceding claims, wherein said support layer has a thickness (d) comprised between 0.3 mm and 2.1 mm, in a particularly preferred version between 0.9 and 1.3 mm and said cover layer (2) has a further thickness (d1) comprised between 0.05 mm and 0.5 mm, in a preferred version between 0.1 and 0.3 mm.

8. Multilayer material (100) according to any one of the preceding claims, wherein the support layer (1) of coagulated microfiber comprises approximately from 40% to 60% by weight of polyamide and approximately from 60% to 40% by weight of polyurethane, preferably approximately from 45% to 55% by weight of polyamide and approximately from 55% to 45% by weight of polyurethane, even more preferably approximately 50% by weight of polyamide and approximately 50% by weight of polyurethane.

9. Multilayer material (100) according to any one of the preceding claims, wherein the support layer (1) of coagulated microfiber is constituted by woven/nonwoven polyamide microfiber, preferably woven/nonwoven polyamide microfiber coagulated with polyurethane, preferably the support layer (1) of coagulated microfiber is constituted by nylon 6 microfiber which is coagulated with polyurethane.

10. Bicycle saddle or motorcycle saddle comprising a covering including a multilayer material according to any one of the preceding claims.

11. Motor vehicle seat comprising a covering including a multilayer material according to any one of the claims 1 to 9.

12. Method for producing a multilayer material (100) having support layer and a cover layer (2), the method comprising the following steps:
- forming a support layer of microfiber of polymer material,
- impregnating the support layer of microfiber with a polyurethane resin and subjecting the impregnated support layer of microfiber to coagulation so as to obtain a support layer of coagulated microfiber,
- dyeing said support layer of microfiber through water dyeing process using a dyeing solution comprising a weight percentage of a first colouring compound suitable for giving a dark coloration to said support layer of microfiber measured as weight concentration of the first colouring compound at dry state comprised between 0.01% and 15%, preferably between 2% and 8%, most preferably about 6% over the weight of the support layer of coagulated microfiber to be dyed,
- preparing a polyurethane composition,
- mixing said polyurethane composition with a colouring solution comprising a concentration indicated as weight percentage of a second colouring compound suitable for giving a black coloration to the polyurethane composition at dry state comprised between 0.01% - 15% in weight and preferably between 2% -8% in weight in relation to the weight of the polyurethane composition for obtaining a coloured polyurethane composition,
- spreading the coloured polyurethane composition on a support material so as to form a polyurethane layer on said support material,
- applying said support material with the polyurethane layer to said support layer of coagulated microfiber so that the polyurethane is directed towards and in contact with the support layer (1) of coagulated microfiber, thus obtaining a multilayer intermediate material,
- laminating said multilayer intermediate material by pressing the support layer (1) of microfiber and said polyurethane layer (2) in order to mutually couple them.

13. Method according to the preceding claim and further comprising a drying phase for causing the reticulation of the polyurethane and binding the cover layer and the support layer of coagulated microfiber.

14. Method according to claim 13 or 14, in which said colouring solution is a Dioctyl adipate (DOA) of said second compound.
